(19) Europäisches Patentamt
European Patent Office
Office européen des brevets

(11) **EP 4 609 158 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **24727629.8**

(22) Anmeldetag: **11.04.2024**

(51) Internationale Patentklassifikation (IPC):
**G01L 3/00** *(2006.01)* **G01M 13/027** *(2019.01)*
**G01L 3/22** *(2006.01)* **G01M 13/025** *(2019.01)*

(52) Gemeinsame Patentklassifikation (CPC):
**G01M 13/025; G01L 3/22**

(86) Internationale Anmeldenummer:
**PCT/AT2024/060139**

(87) Internationale Veröffentlichungsnummer:
**WO 2024/211946 (17.10.2024 Gazette 2024/42)**

(54) **VERBESSERTES VERFAHREN ZUM BESTIMMEN EINES VERLUSTMOMENTS EINER ELEKTRISCHEN MASCHINE MIT ROTOR**

IMPROVED METHOD FOR DETERMINING A LOSS TORQUE OF AN ELECTRICAL MACHINE COMPRISING A ROTOR

PROCÉDÉ AMÉLIORÉ DE DÉTERMINATION D'UN COUPLE DE PERTE D'UNE MACHINE ÉLECTRIQUE COMPRENANT UN ROTOR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **12.04.2023 AT 502682023**

(43) Veröffentlichungstag der Anmeldung:
**03.09.2025 Patentblatt 2025/36**

(73) Patentinhaber:
• **AVL List GmbH**
**8020 Graz (AT)**
• **Piezocryst Advanced Sensorics GmbH**
**8020 Graz (AT)**

(72) Erfinder:
• **WIMLER, David**
**8130 Frohnleiten (AT)**

• **HIRSCHLER, Michael**
**8020 Graz (AT)**
• **SCHRICKER, Alexander**
**8046 Graz (AT)**
• **SCHMIDT, Joachim**
**8042 Werndorf (AT)**
• **NEMETH, Robert**
**8430 Leibnitz (AT)**

(74) Vertreter: **Hartinger, Mario**
**AVL List GmbH**
**Patent Department**
**Hans-List-Platz 1**
**8020 Graz (AT)**

(56) Entgegenhaltungen:
**WO-A1-2021/184054 DE-A1- 102013 109 415**

**Beschreibung**

Die Erfindung betrifft ein Verfahren zum Bestimmen eines Verlustmoments einer elektrischen Maschine mit einem Rotor, wobei die elektrische Maschine in der Weise an einer Messvorrichtung gelagert ist, dass ein axiales Drehmoment an der Maschine messbar ist.

Aus dem Dokument DE 102013109415 A1 ist es bekannt, durch die Messung von zwei Drehmomenten und einer Bildung der Differenz daraus das Verlustmoment einer Getriebekomponente zu bestimmen.

Das an einer Elektromaschine in motorischem Betrieb anliegende Widerstands- oder Lastmoment $M_w$ setzt sich zusammen aus einem Antriebsmoment $M_a$ und einem Verlustmoment $M_v$, welches dem Antriebsmoment entgegenwirkt. Das Verlustmoment wird dabei insbesondere durch Luftreibung, durch Lagereibung und, je nach Elektromaschine, durch Bürstenreibung und/oder elektrische Wirbelströme verursacht.

Das Dokument WO 2018/046296 A1 offenbart ein Verfahren zum Charakterisieren einer elektromechanischen Aktuatoreinheit, wobei ein Wert für ein Verlustmoment der elektromechanischen Aktuatoreinheit anhand eines Leerlaufstroms, der Differenz zwischen dem ersten Wert und dem zweiten Wert für die in dem Elektromotor induzierte Spannung und der Massenträgheit der elektromechanischen Aktuatoreinheit bestimmt wird.

Aus dem Dokument WO 2019/144171 A1 ist des Weiteren ein Messsystem zur Bestimmung eines Kraft- und/oder eines Drehmoments an einer drehmomentübertragenden Welle bekannt, wobei das Messsystem wenigstens drei, insbesondere wenigstens vier, Piezoelemente mit jeweils einer Vorzugsrichtung aufweist, welche jeweils an unterschiedlichen Positionen um eine Drehachse der Welle in einem Kraftfluss, welcher über die Welle übertragen wird, in der Weise angeordnet sind, dass eine Kraft des Kraftflusses, insbesondere ausschließlich, an den Piezoelementen anliegt, wobei die Vorzugsrichtungen jeweils parallel zu oder in einer einzigen Ebene liegen, welche von der Drehachse geschnitten wird, und wobei die Vorzugsrichtung von wenigstens zweien, insbesondere wenigstens dreien, der Piezoelemente zueinander weder parallel noch antiparallel ausgerichtet sind.

Aus dem Dokument WO 2019/144172 A1 ist des Weiteren eine Messvorrichtung zum Bestimmen einer Kraft und/oder eines Drehmoments an einer drehmomentübertragenden Welle bekannt, welche durch eine Lagervorrichtung, insbesondere an einer Maschine, deren Aus- und/oder Eingangswelle durch die drehmomentübertragende Welle gebildet ist, gelagert ist, wobei die Messvorrichtung wenigstens zwei, vorzugsweise drei oder vier, Piezoelemente in einer Fixierungseinrichtung aufweist, wobei die Fixierungseinrichtung die Piezoelemente trägt und in der Weise ausgebildet ist, dass mittels der Piezoelemente eine Kraft, insbesondere Scherkraft, zwischen der Lagervorrichtung und der Abstützvorrichtung zum Abstützen der Lagervorrichtung messbar ist.

Es ist eine Aufgabe der Erfindung, ein verbessertes Verfahren zum Bestimmen eines Verlustmoments einer elektrischen Maschine bereitzustellen. Insbesondere ist es eine Aufgabe der Erfindung, das Verlustmoment $M_v$ ohne eine Messung von elektrischen Parametern der elektrischen Maschine bestimmen zu können.

Diese Aufgabe wird durch die Lehre der unabhängigen Ansprüche gelöst. Vorteilhafte Ausgestaltungen werden in den abhängigen Ansprüchen beansprucht.

Ein erster Aspekt der Erfindung betrifft ein Verfahren zum Bestimmen eines Verlustmoments einer elektrischen Maschine mit einem Rotor, wobei die elektrische Maschine in der Weise an einer Messvorrichtung gelagert ist, dass ein axiales Drehmoment an der Maschine messbar ist und wobei der Rotor frei drehend ist, die folgenden Arbeitsschritte aufweisend:

- erstes Betreiben der Maschine in der Weise, dass der Rotor eine vordefinierte Drehzahl erreicht;

- zweites Betreiben der Maschine im Leerlauf, wenn die vordefinierte Drehzahl erreicht ist, wobei ein Signal der Messvorrichtung, welches das axiale Moment an der Maschine repräsentiert, überwacht wird;

- Identifizieren eines Sprungs in dem Signal; und

- Bestimmen des Betrags des Sprungs, wobei der Betrag das Verlustmoment der elektrischen Maschine angibt.

Ein zweiter Aspekt der Erfindung betrifft ein System zum Bestimmen eines Verlustmoments einer elektrischen Maschine mit Rotor, wobei die Maschine in der Weise an einer Messvorrichtung gelagert ist, dass ein axiales Drehmoment an der Maschine messbar ist und wobei der Rotor frei drehend ist, aufweisend:

- Mittel zum Steuern eines Betriebs der Maschine, eingerichtet, um die Maschine zunächst in der Weise zu betreiben, dass der Rotor eine vordefinierte Drehzahl erreicht, und um die Maschine danach im Leerlauf zu betreiben;

- Mittel zum Überwachen eines Signals der Messvorrichtung, welches das axiale Moment einer Maschine repräsentiert;

- Mittel zum Identifizieren eines Sprungs in dem Signal; und

- Mittel zum Bestimmen des Betrags des Sprungs, wobei der Betrag das Verlustmoment der elektrischen Maschine angibt.

Frei drehend im Sinne der Erfindung bedeutet vorzugsweise nicht von einer externen Last belastet.

Ein Piezoelement in Sinne der Erfindung weist wenigstens einen Piezokrystall und Kontakte zu dessen elektrischer Kontaktierung auf. Vorzugsweise ist das Piezoelement als ein Sensor mit weiteren Komponenten wie einem Gehäuse ausgebildet. Weiter vorzugsweise weist ein Piezokrystall einen piezoelektrischen Effekt auf.

Eine Vorzugsrichtung im Sinne der Erfindung gibt an, in welcher Belastungsrichtung des Piezoelements, insbesondere mittels einer Scherkraft auf dessen Stirnfläche, die stärkste Spannung in dem Piezokristall des Piezoelements erzeugt wird. Die Vorzugsrichtung wird auch als Polarisationsrichtung bezeichnet.

Ein axiales Drehmoment im Sinne der Erfindung ist vorzugsweise das an dem Rotor einer Maschine anliegende Drehmoment.

In einem Betrieb im Leerlauf im Sinne der Erfindung bewirkt der Steuerstrom vorzugsweise weder ein Antriebs- noch ein Bremsmoment. Weiter vorzugsweise ist der Steuerstrom abgeschaltet.

Die Erfindung beruht auf dem Ansatz, das Verlustmoment einer elektrischen Maschine über ein Reaktionsmoment zum Abstützen der elektrischen Maschine durch ein Nullsetzen des Antriebsmoments $M_a$ der elektrischen Maschine zu bestimmen.

Erfindungsgemäß wird dies dadurch erreicht, indem die Maschine zunächst frei drehend auf eine vordefinierte Drehzahl gebracht wird und dann bei konstant gehaltener Drehzahl abrupt in einen Leerlaufbetrieb der elektrischen Maschine umgeschaltet wird. Infolgedessen ergibt sich ein Sprung in dem an dem Rotor 4 anliegenden Drehmoment, welches dem axialen Reaktionsmoment des Motors entspricht.

Das erfindungsgemäße Verfahren ermöglicht es, das Verlustmoment einer elektrischen Maschine direkt zu messen, ohne am Rotor eine Last vorsehen zu müssen. Mit anderen Worten wird das Massenträgheitsmoment des Rotors nicht durch eine mit diesem rotierende Messvorrichtung verfälscht. Hierdurch kann das Verlustmoment der elektrischen Maschine wesentlich genauer bestimmt werden.

Auch elektrische Kenngrößen wie induzierte Spannungen und Ströme des Elektromotors müssen erfindungsgemäß nicht gemessen werden, um das Verlustmoment zu bestimmen. Diesbezüglich hat die Erfindung den Vorteil, dass das Verlustmoment durch keine Messung beeinträchtigt werden kann. Darüber hinaus muss kein Verlustmoment aus elektrischen Messungen erst anhand von physikalischen Beziehungen berechnet werden. Auch gegenüber einer solchen Berechnung ist das erfindungsgemäße Verfahren zum Bestimmen des Verlustmoments wesentlich genauer.

Darüber hinaus kann das erfindungsgemäße Verfahren auf Prüfständen ausgeführt werden, welche wesentlich einfacher aufgebaut sind als zum Beispiel bei dem Einsatz eines Drehmomentflansches auf Basis von Dehnungsmessstreifen. Auch ist erfindungsgemäß keine Belastungsmaschine notwendig. Darüber hinaus müssen keine Drehzahlrampen gefahren werden.

In einer vorteilhaften Ausgestaltung weist das Verfahren des Weiteren den Arbeitsschritt auf:

- Filtern eines Signals mittels eines Tiefpassfilters, welcher vorzugsweise eine Grenzfrequenz von etwa 500 Hz aufweist.

Entsprechend weist das System zum Bestimmen eines Verlustmoments vorzugsweise Mittel zum Filtern des Signals mittels eines Tiefpassfilters auf, welcher vorzugsweise eine Grenzfrequenz von etwa 500 Hz aufweist.

In einer weiteren vorteilhaften Ausgestaltung weist das Verfahren des Weiteren den Arbeitsschritt auf:

- erstes Fitten wenigstens eines ersten Abschnitts des Signals vor dem identifizierten Sprung und zweites Fitten wenigstens eines zweiten Abschnitts des Signals nach dem identifizierten Sprung, wobei der Betrag des Sprungs auf der Grundlage des ersten und zweiten Fittens bestimmt wird.

Des Weiteren weist das System zum Bestimmen eines Verlustmoments vorzugsweise Mittel zum ersten Fitten des wenigstens einen ersten Abschnitts des Signals vor dem identifizierten Sprung und zum zweiten Fitten des wenigstens eines zweiten Abschnitts des Signals nach dem identifizierten Sprung auf, wobei der Betrag des Sprungs durch die Mittel auf der Grundlage des ersten Fittens und des zweiten Fittens bestimmt wird. Bei dem Sprung des Drehmoments im Messsignal handelt es sich um ein niederfrequentes Signal mit geringer Amplitude. Daher ist es vorteilhaft, das Messsignal zu filtern, um den Sprung zu erkennen.

Durch das Fitten kann ein jeweiliger Wert des Signals in beiden Abschnitten besser bestimmt werden. Vorzugsweise kommt ein linearer oder quadratischer Fit zum Einsatz.

Fitten im Sinne der Erfindung ist vorzugsweise eine Technik, mit der man eine gegebene mathematische Modelfunktion bestmöglich an Datenpunkte anpasst. Weiter vorzugsweise wird Fitten auch Kurvenanpassung genannt. Vorzugsweise wird ein Fitten über eine Minimierung der Summe der Abstandsquadrate erreicht.

In einer weiteren vorteilhaften Ausgestaltung des Verfahrens weist die Messvorrichtung eine Fixierungseinrichtung und wenigstens ein Piezoelement, bevorzugt drei, noch bevorzugter vier Piezoelemente mit jeweils einer Vorzugsrichtung auf, wobei die Fixierungseinrichtung das wenigstens eine Piezoelement trägt und die elektrische Maschine über das wenigstens eine Piezoelement in der Weise lagert, dass mittels wenigstens einen Piezoelements Kräfte zwischen der elektrischen Maschine und der Fixierungseinrichtung messbar sind.

Der Einsatz von Piezoelementen als Messelemente der Messvorrichtung ermöglich eine besonders genaue Bestimmung des Sprungs in dem Signal. Piezoelemente ermöglichen eine hoch dynamische Messung, so dass diese die Veränderung des Signals von dem Wert vor dem Sprung auf den Wert nach dem Sprung besonders exakt abbilden.

Durch die Lagerung der elektrischen Maschine über das wenigstens eine Piezoelement kann des Weiteren ein Reaktionsmoment auf das axiale Drehmoment gemessen werden, welches am Rotor wirkt - ohne Messungen am Rotor selbst vorzunehmen. Piezoelemente eignen sich hierbei zur Lagerung besonders gut, weil diese eine sehr hohe Steifigkeit und Sensivität gegenüber hochdynamischen Schwingungen aufweisen.

Grundsätzlich ist es dabei möglich, die elektrische Maschine nur über ein einzelnes Piezoelement abzustützen und weitere Abstützpunkte durch andere Abstützelemente abzustützen. Ein Teil des Kraftflusses geht dann aber nicht über Piezoelemente, sondern über die anderen Abstützelemente. Daher ist es von Vorteil, mehr Piezoelemente zum Abstützen der elektrischen Maschine einzusetzen. Insbesondere ist es von Vorteil, zwei, drei oder sogar vier Piezoelemente einzusetzen und die elektrische Maschine dann ausschließlich über die Piezoelemente abzustützen, so dass der gesamte von der elektrischen Maschine erzeugte Kraftfluss über die Piezoelemente verläuft. Hierdurch wird eine besonders hohe Messgenauigkeit erreicht.

In einer weiteren vorteilhaften Ausgestaltung des Verfahrens liegen die Vorzugsrichtung oder die Vorzugsrichtungen jeweils parallel zu oder in einer einzigen Ebene und die Drehachse des Rotors schneidet die Ebene in einem Winkel zwischen 45° und 135°, bevorzugt zwischen 85° und 95°, am bevorzugtesten wenigstens im Wesentlichen senkrecht.

In dieser vorteilhaften Ausgestaltung wird der Motor über seine Stirnseite an der Fixierungseinrichtung abgestützt. Durch diese Anordnung kann das Verlustmoment durch piezoelektrische Scherelemente als Piezoelemente besonders einfach bestimmt werden. Insbesondere können die Messsignale von einzelnen Piezoelementen besonders einfach miteinander zur Bestimmung von Kraftkomponenten verrechnet werden.

Wenigstens im Wesentlichen im Sinne der Erfindung bedeutet in diesem Zusammenhang vorzugsweise einen Winkelbereich von +/- 1°.

In einer weiteren vorteilhaften Ausgestaltung des Verfahrens sind die Piezoelemente jeweils an unterschiedlichen Positionen um eine Drehachse des Rotors der elektrischen Maschine angeordnet. Hierdurch kann die elektrische Maschine besonders vorteilhaft auf der Fixierungseinrichtung abgestützt werden.

In einer weiteren vorteilhaften Ausgestaltung des Verfahrens weist das wenigstens eine Piezoelement ein erstes Teilelement und ein zweites Teilelement auf, mittels welchem jeweils Scherkräfte messbar sind, wobei eine Vorzugsrichtung des ersten Teilelements wenigstens im Wesentlichen senkrecht zu einer Vorzugsrichtung des zweiten Teilelements ausgerichtet ist, wobei die Teilelemente jeweils entlang ihrer Stirnseite zueinander angeordnet sind, wobei eine Messung des ersten Teilelements und eine Messung des zweiten Teilelements in Signalen der Messvorrichtung berücksichtigt wird.

Hierdurch ist die Messvorrichtung nicht empfindlich gegenüber einer Ausrichtung der Vorzugsrichtung der beiden Teilelemente. Mit anderen Worten können die beiden Teilelemente, sofern deren relative Ausrichtung nur der definierten entspricht, in beliebiger Weise an der Fixierungseinrichtung angeordnet sein, wobei immer ein volles Messsignal zur Verfügung steht. Auf diese Weise wird eine Montage der Messvorrichtung wesentlich vereinfacht und Fehler bei der Bestimmung eines Verlustmoments aufgrund einer Fehlausrichtung eines oder mehrerer Vorzugsrichtungen können vermieden werden.

In einer weiteren vorteilhaften Ausgestaltung des Verfahrens ist die Vorzugsrichtung des wenigstens einen Piezoelements jeweils wenigstens im Wesentlichen tangential zu einer Drehrichtung des Rotors ausgerichtet. Auch hierdurch kann eine Berechnung eines Verlustmoments der elektrischen Maschine auf einfache Weise erfolgen.

In einer weiteren vorteilhaften Ausgestaltung des Verfahrens ist ein jeweiliger Winkel zwischen der Vorzugsrichtung des wenigstens einen Piezoelements und Tangenten an die Drehrichtung an den Orten des wenigstens einen Piezoelements in dem Signal des axialen Drehmoments berücksichtigt. Durch eine Berücksichtigung der Ausrichtung der Vorzugsrichtung kann das Verlustmoment besonders genau berechnet werden.

In einer weiteren vorteilhaften Ausgestaltung liegen die Vorzugsrichtung oder die Vorzugsrichtungen jeweils parallel zu oder in einer einzigen Ebene oder die Vorzugsrichtung oder die Vorzugsrichtungen liegen jeweils senkrecht zu einer einzigen Ebene, wobei eine Drehachse des Rotors wenigstens im Wesentlichen parallel zu der Ebene, insbesondere in waagrechter Richtung, ausgerichtet ist.

Wenigstens im Wesentlichen im Sinne der Erfindung bedeutet in diesem Zusammenhang vorzugsweise einen Winkelbereich von +/- 1°.

Hierdurch kann eine Bestimmung des Verlustmoments mit "horizontal" angeordneter Drehachse des Rotors erfolgen, wobei der Motor in einer liegenden Stellung ist. Dies ist insbesondere dann von Vorteil, wenn der Motor auf einem Prüfstand angeordnet ist, auf welchem dieser in einer anderen Messanordnung auch mit einer Lastmaschine verbunden werden soll. Zudem kann in dieser vorteilhaften Ausgestaltung das Verlustmoment mittels piezoelektrischer Druckelemente bestimmt werden.

In einer weiteren vorteilhaften Ausgestaltung des Verfahrens sind die Piezoelemente jeweils an unterschiedlichen Positionen angeordnet und jeweils zwei Piezoelemente sind auf einer der beiden Seiten der Fixierungseinrichtung in Bezug auf die Drehachse angeordnet.

Durch diese symmetrische Anordnung kann das Drehmoment bei "waagrecht" ausgerichteter Drehachse des Rotors besonders einfach bestimmt werden.

In einer weiteren vorteilhaften Ausgestaltung des Verfahrens weisen die Piezoelemente ein erstes Teilelement und/oder ein zweites Teilelement, mittels welchem oder welchen eine Scherkraft messbar ist, und ein drittes Teilelement, mittels welchem eine Druckkraft messbar ist, auf, wobei die Teilelemente entlang ihrer Stirnseite zueinander angeordnet sind, wobei eine Messung des ersten Teilelements und/oder des zweiten Teilelements und eine Messung des dritten Teilelements in dem Signal der Messvorrichtung berücksichtigt wird. Durch diese Art der Piezoelemente können sowohl Scherkräfte als auch Druckkräfte gemessen werden.

In einer weiterein vorteilhaften Ausgestaltung des Verfahrens weist die Messvorrichtung des Weiteren eine Vorspanneinrichtung und erste Vorspannelemente auf, wobei das wenigstens eine Piezoelement zwischen der Fixierungseinrichtung und der Vorspanneinrichtung mittels der ersten Vorspannelemente in der Weise vorspannbar oder vorgespannt sind, dass das wenigstens eine Piezoelement kraftschlüssig fixiert ist, und wobei die elektrische Maschine an der Vorspanneinrichtung drehfest befestigt ist.

Das Aufbringen einer Vorspannung mittels einer Vorspanneinrichtung erlaubt, dass auf der Messvorrichtung elektrische Maschinen gewechselt werden können, ohne dass eine Kalibrierung der Messvorrichtung beeinträchtigt wird. Grundsätzlich müssen Piezoelemente vorgespannt werden, um ein gewünschtes lineares Verhalten zu zeigen. Jedes Vorspannen und Entspannen kann jedoch zu einer Änderung im Kraftfluss und somit zu einer Änderung der Kalibrierung der Messvorrichtung führen. Durch die Vorspannvorrichtung muss das System nur einmal vorgespannt werden und die Berechnung kann immer gleichbleiben. Hierdurch können elektrische Maschinen insbesondere schnell gewechselt werden.

Ist keine Vorspanneinrichtung vorhanden, so werden die Piezoelemente direkt zwischen dem Motor 2, insbesondere dessen Gehäuse, und der Fixierungseinrichtung 5 kraftschlüssig fixiert.

In einer weiteren vorteilhaften Ausgestaltung des Verfahrens ist die elektrische Maschine an der Fixierungseinrichtung befestigt und wird von dem wenigstens einen Piezoelement in der Weise abgestützt, dass das wenigstens eine Piezoelement kraftschlüssig fixiert ist.

Hierdurch werden die Piezoelemente in ihrer Position gehalten und eine Kalibrierung beim Wechsel von Maschinen ist nicht notwendig.

In einer weiteren vorteilhaften Ausgestaltung des Verfahrens werden die Fixierungseinrichtung oder die elektrische Maschine ausschließlich durch das wenigstens eine Piezoelement abgestützt.

Hierdurch verläuft der gesamte relevante Kraftfluss über das oder die Piezoelemente. Dies führt zu einer besonders hohen Messgenauigkeit.

In einer weiteren vorteilhaften Ausgestaltung wird das Signal des axialen Moments mittels eines, insbesondere linearen, Gleichungssystems anhand von Messungen des wenigstens einen Piezoelements bestimmt.

Durch die Verwendung eines Gleichungssystems kann das Verlustmoment besonders genau bestimmt werden. Insbesondere müssen die Vorzugsrichtungen der Piezoelemente nicht exakt ausgerichtet sein, da der jeweilige Beitrag der Piezoelemente zu verschiedenen Kraftkomponenten in dem linearen Gleichungssystem berücksichtigt werden kann.

Weitere Vorteile und Merkmale ergeben sich aus der nachfolgenden Beschreibung in Zusammenhang mit den Figuren. Es zeigen wenigstens teilweise schematisch:

**Figur 1**    Eine teilweise transparente Draufsicht eines ersten Ausführungsbeispiels einer Messanordnung zum Bestimmen eines Verlustmoments einer elektrischen Maschine;

**Figur 2**    eine teilweise transparente Seitenansicht der Messanordnung gemäß Figur 1;

**Figur 3**    eine teilweise transparente Draufsicht eines zweiten Ausführungsbeispiels der Messanordnung zum Bestimmen eines Verlustmoments einer elektrischen Maschine;

**Figur 4**    eine teilweise transparente Draufsicht eines dritten Ausführungsbeispiels der Messanordnung zum Bestimmen eines Verlustmoments einer elektrischen Maschine;

**Figur 5**       eine teilweise transparente Seitenansicht der Messanordnung gemäß Figur 4;

**Figur 6**       eine teilweise transparente Draufsicht eines vierten Ausführungsbeispiels der Messanordnung zum Bestimmen eines Verlustmoments einer elektrischen Maschine;

**Figur 7**       eine teilweise transparente Seitenansicht der Messanordnung gemäß Figur 4 senkrecht zur Drehachse;

**Figur 8**       eine weitere teilweise transparente Seitenansicht der Messanordnung gemäß Figur 4 parallel zur Drehachse;

**Figur 9**       eine alternative Ausführungsform eines Piezoelements;

**Figur 10**      eine weitere alternative Ausführungsform eines Piezoelements;

**Figur 11**      ein Diagramm, welches den zeitlichen Verlauf der Winkelgeschwindigkeit des Rotors, des an dem Rotor anliegenden Drehmoments und des Steuerstroms in Abhängigkeit von der Zeit zeigt;

**Figur 12**      ein weiteres Diagramm, welches den Steuerstrom und das an dem Rotor anliegende Drehmoment $M_z$ nochmals in Abhängigkeit der Zeit darstellt;

**Figur 13**      ein Blockdiagramm eines Verfahrens zum Bestimmen eines Verlustmoments einer elektrischen Maschine; und

**Figur 14**      ein Ausführungsbeispiel eines Systems zum Bestimmen eines Verlustmoments.

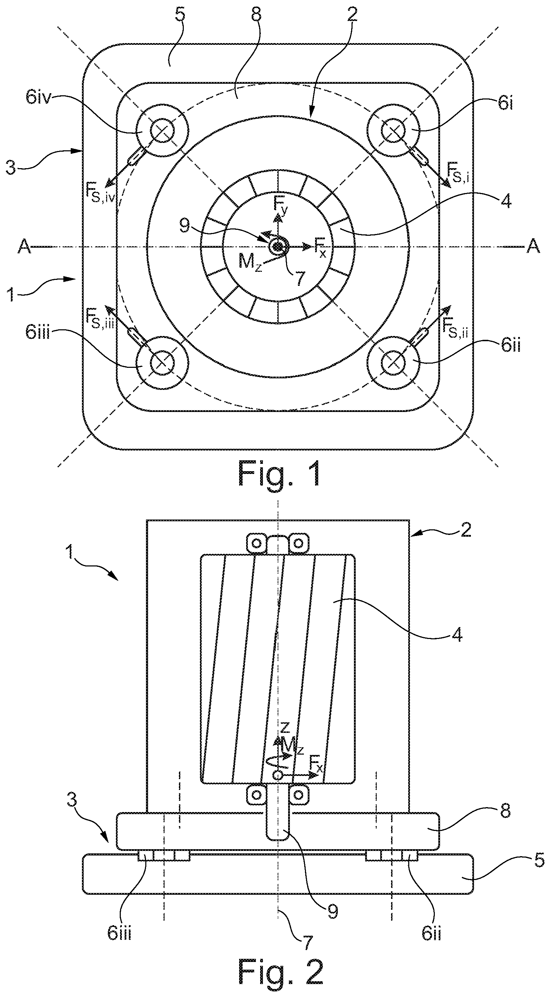

Anhand der **Figuren 1 und 2** wird ein erstes Ausführungsbeispiel einer Messanordnung 1 zum Bestimmen eines Verlustmoments einer elektrischen Maschine 2 erläutert. Figur 2 ist hierbei eine teilweise transparente Seitenansicht der Messanordnung 3 aus Figur 1.

Bei der elektrischen Maschine 2 handelt es sich vorzugsweise um einen Motor mit rotierender Welle 9, welche einen Rotor 4 aufweist, welcher sich auf der rotierenden Welle 9 um eine Drehachse 7 dreht.

Die Messanordnung 1 weist zur Messung von Momenten eine Messvorrichtung 3 auf. Die Messvorrichtung 3 weist vorzugsweise eine Fixierungseinrichtung 5 und eine Vorspanneinrichtung 8 auf. Zwischen der Fixierungseinrichtung 5 und der Vorspanneinrichtung 8 sind Piezoelemente 6i, 6ii, 6iii und 6iv angeordnet, welche mittels Vorspannelementen, insbesondere Schrauben (nicht dargestellt) fixiert und vorgespannt werden. Bei den Piezoelementen 6i bis 6iv handelt es sich vorzugsweise um piezoelektrische Messelemente, welche den piezoelektrischen Schereffekt ausnutzen. Dies bedeutet, dass die Piezoelemente Scherkräfte $F_{S,i}$, bis $F_{S,iv}$ messen, die in einer Ebene wirken, in welcher die Piezoelemente 6i bis 6iv angeordnet sind.

Der Motor 2 ist in dem in den Figuren 1 und 2 gezeigten Ausführungsbeispiel auf der Vorspanneinrichtung 8 drehfest befestigt. Mithin werden Drehmomente, welche auf die Welle 9 bzw. den Rotor 4 wirken, über das Gehäuse des Motors 2 auf die Vorspannrichtung 8 übertragen. Die Fixierungseinrichtung 5 ist vorzugsweise drehfest gelagert, so dass diese Momente an den Piezoelementen 6i bis 6iv die Scherkräfte $F_{S,i}$ bis $F_{S,iv}$ hervorrufen.

Der elektrische Motor 2 ist frei hängend. Dies bedeutet, dass der Rotor 4 frei drehend ist, d.h. nicht von einer externen Last belastet ist. Dies ist allen Ausführungsbeispiele der Messanordnung 1 gemein.

Wie aus Figur 2 ersichtlich, sind die Messelemente 6i bis 6iv wenigstens teilweise in Ausnehmungen der Fixierplatte 5 aufgenommen.

Vorzugsweise weist die Vorspanneinrichtung 8, welche in Figur 2 als Vorspannplatte ausgebildet ist, eine Aussparung auf, durch welche die Welle 9 des Motors 2 geführt werden kann. Weiter vorzugsweise weist auch die Fixiereinrichtung 5, welche in Figur 2 als Fixierplatte ausgebildet ist, eine solche Aussparung auf.

Die Kraftkomponenten, welche durch die Piezoelemente 6i bis 6iv gemessen werden, sind in Figur 1 eingezeichnet. Dies sind die Kraftkomponente in Y-Richtung $F_y$, die Kraftkomponente in X-Richtung $F_x$ und das axiale Drehmoment um die Drehachse 7 $M_z$. Wie in Figur 1 gezeigt, sind Vorzugsrichtungen der Piezoelemente, angegeben durch die Vektorpfeile $F_{S,i}$ bis $F_{S,iv}$ der gemessenen Scherkräfte, tangential an eine Drehrichtung des Rotors 4 um die Drehachse 7 ausgerichtet.

In diesem Fall kann das axiale Drehmoment $M_z$, welches an dem Motor 2 anliegt, einfach durch folgende Gleichung berechnet werden:

$$Mz = (-F_{S,i} + F_{S,ii} - F_{S,iii} + F_{S,iv}) * R$$

wobei R der Abstand der Piezoelemente 6i bis 6iv von der Drehachse 7 des Rotors 4 ist.

Die Vorzeichen vor den gemessenen Scherkräften ergeben sich aus der jeweiligen Ausrichtung der Vorzugsrichtung der Piezoelemente 6i bis 6iv. Die gemessenen Scherkräfte $F_{S,i}$ bis $F_{S,iv}$ errechnen sich hierbei aus den Messsignalen $S_i$, $S_{ii}$, $S_{iii}$, $S_{iv}$, welche vorzugsweise in Pikocoulomb angegeben sind und einer jeweiligen Sensorempfindlichkeit, welche vorzugsweise in N/pC angegeben ist.

In der obigen Gleichung spielt der jeweilige Winkel $\beta$ zwischen den Vorzugsrichtungen der Piezoelemente 6i bis 6iv und der jeweiligen Tangente an dem Ort des Piezoelements 6i bis 6iv an die Drehrichtung des Rotors 4 eine wichtige Rolle. Durch diesen Winkel $\beta$ wird vorgegeben, welcher Anteil einer gemessenen Scherkraft $F_S$ der tangentialen Richtung und damit dem Drehmoment $M_z$ zuzurechnen sind.

Hierbei ergibt sich die Tangentialkraft Ft aus der Scherkraft $F_S$ gemäß folgender Gleichung:

$$F_t = F_S \cdot \cos \beta$$

In dem in den Figuren 1 und 2 gezeigten ersten Ausführungsbeispiel der Messanordnung 1 ist der Winkel $\beta = 0°$ für die Piezoelemente 6ii und 6iv und $\beta = 180°$ für die Piezoelemente 6i und 6iii. Die einzelnen Piezoelemente 6i bis 6iv können aber auch beliebig gelegt werden. Hierdurch wird, wie oben beschrieben, nicht die gesamte Kraft in tangentialer Richtung gemessen, sondern nur eine anteilige Kraft Ft gemäß obiger Gleichung. Um das Drehmoment $M_z$ gemäß der oben angegebenen Gleichung berechnen zu können, muss der gemessene tangentiale Anteil der Kraft F mit einem Gewichtungsfaktor wieder auf 100 % errechnet werden. Beispielsweise würde für $\beta = 45°$ $F_t = 0,707 \cdot F_S$ sein. Daher müsste die gemessene tangentiale Kraft Ft mit 1,293 multipliziert werden, um fehlende Signalkomponenten zu kompensieren.

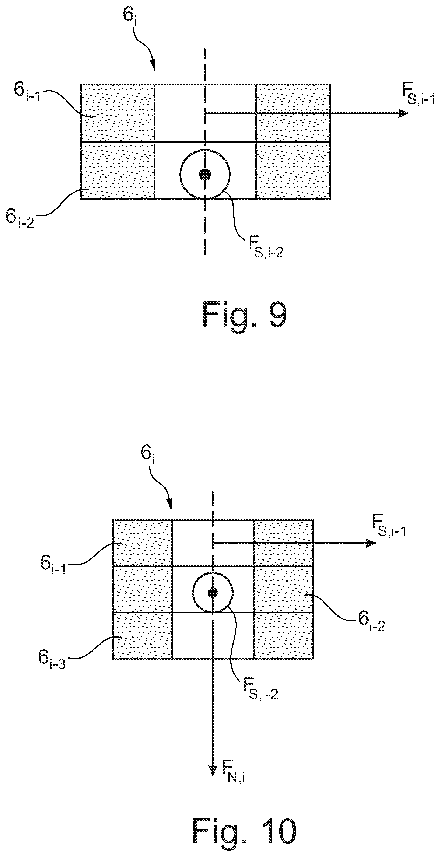

Um stets ein volles Messsignal zur Verfügung zu haben, können auch Piezoelemente 6i zum Einsatz kommen, welche zwei Teilelemente 6i-1, 6i-2 aufweist, welche an ihren Stirnseiten aneinander anliegend angeordnet sind. Hierfür sollte die Vorzugsrichtung der einzelnen Teilelemente 6i-1, 6i-2 eine senkrechte Ausrichtung, wie in **Figur 9** durch die eingezeichneten Vektoren der messbaren Scherkräfte $F_{Si-1}$, $F_{Si-2}$ angedeutet ist. Der Betrag der Scherkraft in tangentialer Richtung ergibt sich hierbei aus der projizierten Länge des Summenvektors auf die tangentiale Richtung.

Diese Ausgestaltung der Piezoelements 6i bis 6iv erzeugt also stets ein Messsignal Si, das jenem eines einzelnen Piezoelements entspricht, dessen Vorzugsrichtung in tangentialer Richtung zur Drehrichtung des Rotors 4 ausgerichtet wäre.

Alternativ zu der oben genannten Gleichung zur Berechnung des Drehmoments $M_z$ kann zur Berechnung der Kraftkomponenten $F_x$, $F_y$ und der Drehmomentkomponente $M_z$ in der Ebene, welche durch die Lage der Piezoelemente 6i, 6ii, 6iii, 6iv gebildet wird, auch ein, insbesondere lineares, Gleichungssystem zum Einsatz kommen. Das lineare Gleichungssystem kann in einer Matrixschreibweise zusammengefasst und wie folgt dargestellt werden:

$$\begin{pmatrix} Mz \\ Fx \\ Fy \end{pmatrix} = \begin{pmatrix} C1i & \cdots & C1iv \\ \vdots & \ddots & \vdots \\ C3i & \cdots & C3iv \end{pmatrix} \begin{pmatrix} Si \\ Sii \\ Siii \\ Siv \end{pmatrix}$$

Die einzelnen Koeffizienten der Matrix können durch Kalibrationsmessungen mittels der Messvorrichtung 3 bestimmt werden, welche vorzugsweise nach erfolgter Vorspannung der Piezoelemente 6i bis 6iv durchgeführt werden.

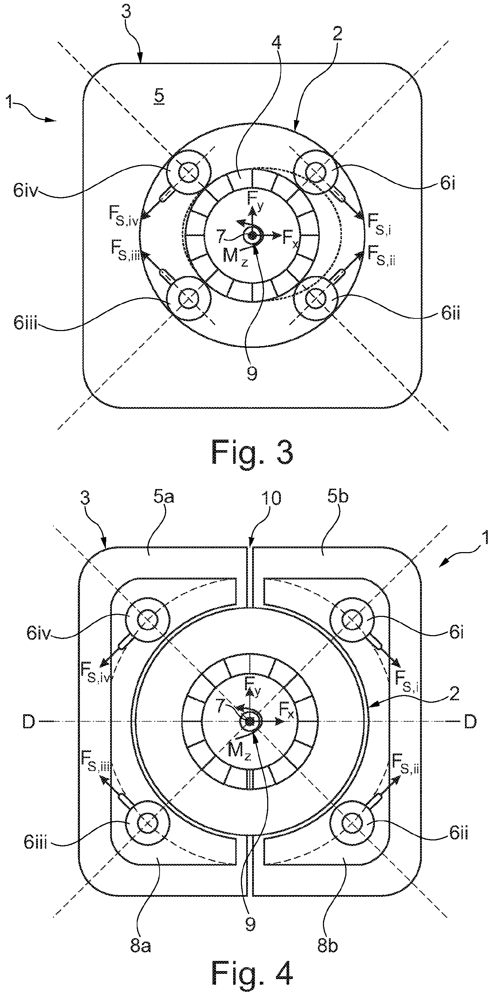

**Figur 3** zeigt ein zweites Ausführungsbeispiel einer Messanordnung 1. In Unterschied zu dem ersten Ausführungsbeispiel der Messanordnung 1 weist das zweite Ausführungsbeispiel lediglich die Fixierungseinrichtung 5 auf, welche als Fixierplatte ausgebildet ist.

Eine Vorspanneinrichtung in Form einer weiteren Platte ist bei dem zweiten Ausführungsbeispiel nicht vorhanden. Dafür wird ein Gehäuse des Motors bzw. der Motor 2 direkt auf den Piezoelementen 6i bis 6iv angeordnet. Das Gehäuse des Motors bzw. der Motor 2 wird hierbei in der Weise mit der Fixierplatte 5 vorgespannt, dass sich ein Kraftschluss zwischen dem Gehäuse des Motors bzw. dem Motor 2 selbst einerseits und zwischen den Piezoelementen 6i bis 6iv und der Fixierplatte 5 andererseits ausbildet. Auf diese Weise können auch in diesem Ausführungsbeispiel Scherkräfte in die Piezoelemente 6i bis 6iv aufgebracht werden.

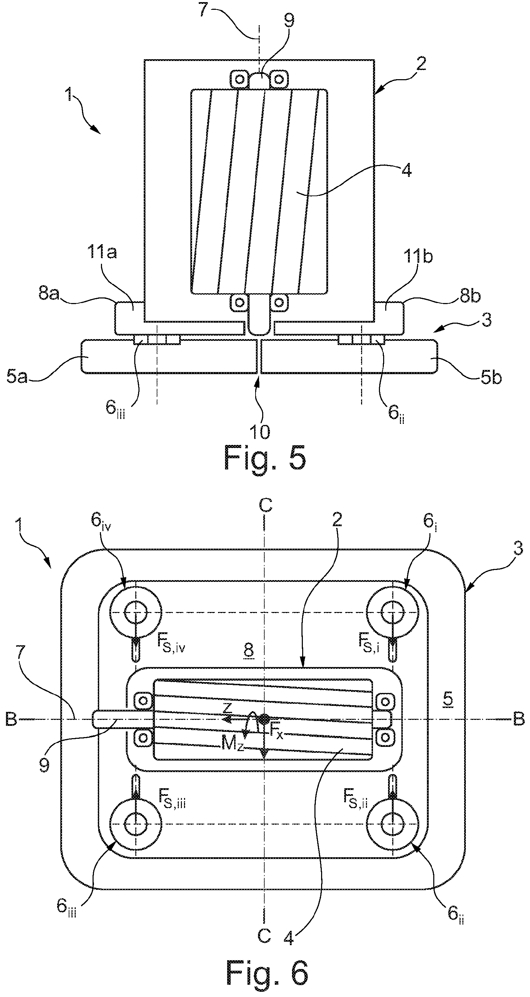

Ein drittes Ausführungsbeispiel einer Messanordnung zum Bestimmen eines Verlustmoments einer elektrischen Maschine wird in Bezug auf die **Figuren 4 und 5** erläutert:

In diesem Ausführungsbeispiel sind sowohl die Fixiereinrichtungen 5a, 5b als auch die Vorspanneinrichtung 8a, 8b zweiteilig ausgeführt. Die Fixiereinrichtung weist eine erste Fixierplatte 5a und eine zweite Fixierplatte 5b auf, welche durch einen Spalt 10 voneinander beabstandet sind. Die Vorspanneinrichtung weist eine erste Halbschale 8a und eine zweite Halbschale 8b auf. Die erste Halbschale 8a ist über zwei Piezoelemente 6iii, 6iv an der ersten Fixierplatte 5a angeordnet und mittels Vorspannelementen (nicht dargestellt) an der ersten Fixierplatte 5a befestigt. Auch die zweite Halbschale 8b ist über zwei Piezoelemente 6i, 6ii auf der zweiten Fixierplatte 5b angeordnet. Auch diese sind mit Spannelementen (nicht dargestellt) aneinander befestigt, so dass über einen Kraftschluss Scherkräfte auf die Piezoelemente 6i, 6ii eingeleitet werden können.

**Figur 5** zeigt eine seitliche Ansicht der Messanordnung 1 gemäß Figur 4. Wie aus Figur 5 hervorgeht, kann der Motor 2 mittels der beiden Halbschalen 8a, 8b fixiert werden.

Die Halbschalen 8a, 8b sind vorzugsweise so ausgebildet, dass diese den Elektromotor 2 durch einen Kraftschluss fixieren können. Hierfür weisen die Halbschalen 8a, 8b jeweils einen Absatz 11a, 11b auf, mittels welchem der Motor 2 geklemmt werden kann. Zum Klemmen weist die Messvorrichtung 3 vorzugsweise weitere Spannmittel (nicht dargestellt) auf, mit welchen die erste Fixierplatte 5a und die zweite Fixierplatte 5b und damit auch die erste Halbschale 8a und die zweite Halbschale 8b gegeneinander vorgespannt werden können. Auch diese Spannelemente sind vorzugsweise als Schraubmittel ausgebildet.

Ein Spalt (kein Bezugszeichen) zwischen den beiden Halbschalen 8a, 8b, aber auch der Spalt 10 zwischen der ersten Fixierplatte 5a und der zweiten Fixierplatte 5b kann dabei so ausgebildet sein, dass auch hier die Welle 9 aufgenommen werden kann.

Den in den Figuren 1 bis 5 gezeigten drei Ausführungsbeispielen ist gemein, dass der Motor 2 mit einer seiner Stirnseiten an der Messvorrichtung 3 angeordnet ist. Das erfindungsgemäße Messprinzip, welches weiter unten erläutert wird, funktioniert jedoch auch, wenn der Motor 2 mit der anderen Stirnseite zu der Messvorrichtung 3 hin angeordnet ist.

Die Vorspanneinrichtung 8 kann auch als motorspezifische Adapterplatte ausgebildet sein. Weiterhin können weitere Platten auf der Vorspannplatte 8 montiert werden, welche als motorspezifische Adapterplatten ausgebildet sind. Hierdurch können Rüstzeiten für die Messanordnung 1, in welcher der Motor 2 auf der Messvorrichtung installiert wird, verringert werden.

Auch wenn in Bezug auf alle drei Ausführungsbeispiele der Figuren 1 bis 5 dargestellt ist, dass die Drehachse 7 des Rotors 4 senkrecht zu einer von den Piezoelementen 6i bis 6iv bzw. deren Vorzugsrichtungen aufgespannten Ebene ausgerichtet ist, kann die Drehachse 7 auch schräg zu dieser Ebene ausgerichtet sein, solange diese die aufgespannte Ebene schneidet. Vorzugsweise schneidet die Drehachse 7 die Ebene in einem Winkel zwischen 45° und 135°. Ist die Drehachse nicht senkrecht zu der Ebene ausgerichtet, so muss die Ausrichtung bei der oben genannten Gleichung zur Berechnung des Drehmoments $M_z$ durch entsprechende geometrische Faktoren berücksichtigt werden. Entsprechend macht eine Schrägstellung der Drehachse 7 in Bezug auf die genannte Ebene auch eine Neubestimmung der Koeffizienten der Kalibrationsmatrix bzw. der Koeffizienten des oben genannten Gleichungssystems notwendig.

In Bezug auf die **Figuren 6 bis 8** wird ein viertes Ausbildungsbeispiel einer Messanordnung 1 zum Bestimmen eines Verlustmoments einer elektrischen Maschine 2 nachfolgend erläutert.

Figur 6 zeigt eine Draufsicht auf die Messanordnung 1 gemäß dem vierten Ausführungsbeispiel. Im Unterschied zu dem ersten, zweiten und dritten Ausführungsbeispiel ist die Welle 9 des Elektromotors 2 und damit auch die Drehachse 7 des Rotors 4 parallel zu einer Ebene angeordnet, welche durch die Lage der Piezoelemente und/oder deren Vorzugsrichtungen 6i bis 6iv aufgespannt wird.

Auch in den Figuren 6 bis 8 sind jeweils jene Kraftkomponenten eingezeichnet, welche mittels der Messanordnung 1 gemäß dem vierten Ausführungsbeispiel gemessen werden können. Dies sind zum einen die Kraftkomponente in X-Richtung $F_x$, die Kraftkomponente in Y-Richtung $F_y$ und das axiale Drehmoment $M_z$ der Welle 9.

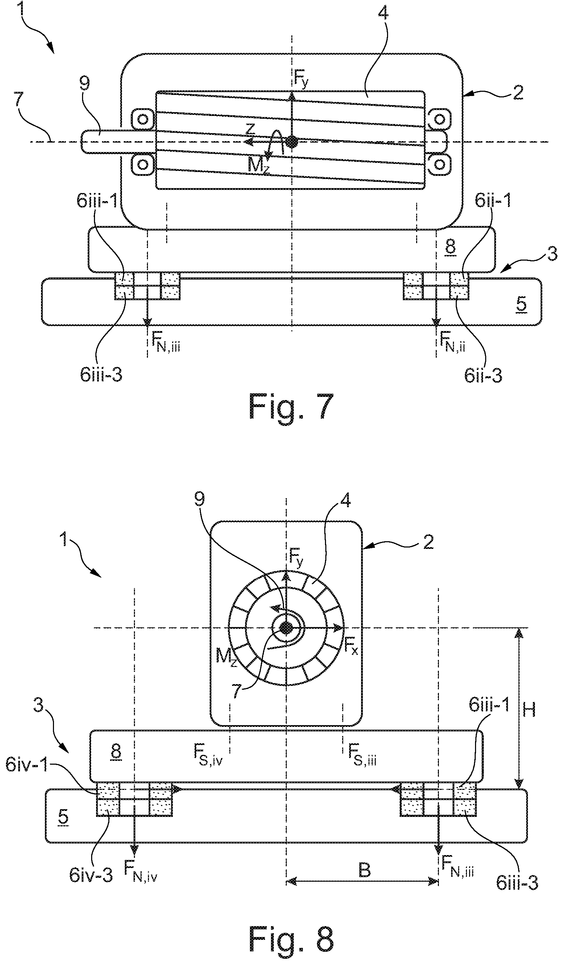

Figur 7 zeigt eine Seitenansicht der Messanordnung 1 aus Figur 6, wobei die Messanordnung teilweise semitransparent dargestellt ist.

Wie aus Figur 7 ersichtlich ist, sind auch bei dem vierten Ausführungsbeispiel die Piezoelemente 6i bis 6iv zwischen der Fixierplatte 5 und der Vorspannplatte 8 angeordnet.

Wie bei den ersten drei Ausführungsbeispielen der Messanordnung 1 sind auch bei dem vierten Ausführungsbeispiel der Messanordnung 1 die Piezoelemente 6i bis 6iv wenigstens teilweise in Ausnehmungen der Fixierplatte 5 angeordnet. Auch bei diesem vierten Ausführungsbeispiel sind Vorspannelemente (nicht dargestellt) vorgesehen, welche die Vorspannplatte 8 mit der Fixierplatte 5 vorspannen und auf diese Weise die Piezoelemente 6i bis 6iv kraftschlüssig zwischen der Vorspannplatte 8 und der Fixierplatte 5 festlegen.

Dies ist auch aus Figur 8 ersichtlich, welche eine Seitenansicht in Richtung der Stirnseite des Elektromotors 2 der Messanordnung 1 zeigt.

Um die gezeigten Kraftkomponenten zu bestimmen, weisen die Piezoelemente 6i bis 6iv jeweils zwei Teilelemente 6ii-1, 6ii-3; 6iii-1, 6iii-3; 6i-1, 6i-3; 6iv-1, 6iv-3 auf. Die zwei Teilelemente eines Piezoelements 6i bis 6iv weisen hierbei jeweils unterschiedliche Vorzugsrichtungen auf, wie in den Figuren 6 bis 8 dargestellt ist.

Wohingegen die in den Figuren 7 und 8 oben angeordneten Piezo-Teilelemente 6i-1 bis 6iv-1 jeweils eine Ausrichtung der Vorzugsrichtung in einer durch die Lage der Piezoelemente gebildete Ebene bzw. parallel zu dieser Ebene aufweisen, dargestellt durch die Vektoren der gemessenen Kräfte $F_{Si}$, $F_{Sii}$, $F_{Siii}$, $F_{Siv}$ bzw. durch die in Figur 6 gezeigten Fortsätze der Piezoelemente 6i bis 6iv, weisen die unten angeordneten Piezo-Teilelemente 6i-3 bis 6iv-3 Ausrichtungen der Vorzugsrichtungen auf, welche senkrecht zu dieser Ebene ausgerichtet sind, dargestellt durch die Vektoren der gemessenen Kräfte $F_{N,i}$, $F_{N,ii}$, $F_{N,iii}$, $F_{N,iv}$.

Anhand einer Messung dieser Kräfte der in Figur 8 eingezeichneten geometrischen Größen Hebel H in Bezug auf die Scherkräfte $F_S$ und Hebel B in Bezug auf die Normalkräfte $F_N$ kann das Drehmoment $M_z$ um die Drehachse 7 gemäß folgender Gleichung bestimmt werden:

$$M_z = H \cdot (+F_{S,i} - F_{S,ii} - F_{S,iii} + F_{S,iv}) + B \cdot (+F_{N,i} - F_{N,ii} - F_{N,iii} + F_{N,iv})$$

Auch in dieser Gleichung sind die Vorzeichen der Kräfte abhängig von der Einbaurichtung der einzelnen Teilelemente 6ii-1, 6ii-3; 6iii-1, 6iii-3; 6i-1, 6i-3; 6iv-1, 6iv-3 der Piezoelemente 6i bis 6iv. Auch hier ergeben sich die gemessenen Scherkräfte $F_S$ und Normalkräfte $F_N$ aus den Messsignalen Si, Sii, Siii, Siv, Ni, Nii, Niii, Niv, welche vorzugsweise in Pikocoulomb gemessen werden.

Auch in diesem Ausführungsbeispiel führen Fertigungstoleranzen in der Praxis zu Abweichungen, welche bei der Verwendung von der oben angegebenen Gleichung zu Fehlern führt. Daher wird auch bei dem vierten Ausführungsbeispiel vorzugsweise ein, insbesondere lineares, Gleichungssystem eingesetzt, dessen Koeffizienten nach erfolgter Vorspannung der Messvorrichtung 3 durch Kalibriermessungen bestimmt.

Ein solches Gleichungssystem kann in Matrixschreibweise wie folgt zusammengefasst werden, wobei S1 bis S4 die Signale Si bis Siv, die Signale der Scherkraftmessung $F_{S,i}$ bis $F_{S,iv}$ sind, und die Signale $N_i$ bis $N_{iv}$ die Messsignale der Normalkraftkomponenten $F_{N,i}$ bis $F_{N,iv}$ sind.

$$\begin{pmatrix} Mz \\ Fx \\ Fy \\ Mx \\ My \end{pmatrix} = \begin{pmatrix} C1Si & \cdots & C1Niv \\ \vdots & \ddots & \vdots \\ C5Si & \cdots & C5Niv \end{pmatrix} \begin{pmatrix} Si \\ \vdots \\ Siv \\ Ni \\ \vdots \\ Niv \end{pmatrix}$$

Um eine Fehlausrichtung der Vorzugsrichtungen der Teilelemente 6i-1 bis 6iv-1 auszugleichen, kann auch bei dem vierten Ausführungsbeispiel der Messanordnung 1 vorgesehen sein, dass die Scherkräfte jeweils additiv mit zwei übereinander liegenden Teilelementen 6ii-1, 6ii-2; 6iii-1, 6iii-2; 6i-1, 6i-2; 6iv-1, 6iv-2 bestimmt werden, wie dies in **Figur 10** dargestellt ist. Dabei müssen die jeweils übereinander liegenden Teilelemente 6ii-1, 6ii-2; 6iii-1, 6iii-2; 6i-1, 6i-2; 6iv-1, 6iv-2 Vorzugsrichtungen aufweisen, die in einem rechten Winkel zueinander angeordnet sind.

Auch in diesem Fall ergibt sich die Scherkraft Ft in tangentialer Richtung an die Drehrichtung des Rotors 4 aus der projizierten Länge des Summenvektors auf die tangentiale Richtung.

Um die Normalkraft trotzdem zu bestimmen, ist ein drittes Teilelement 6i-3 vorhanden, welches eine Normalkraft $F_{N,i}$ messen kann.

Bei allen gezeigten Ausführungsbeispielen der Messanordnung kann eine beliebige Anzahl an Piezoelementen 6i bis 6iv verbaut werden. Grundsätzlich ist aber zu beachten, dass die Vorspannplatte und/oder der elektrische Motor 2 an wenigstens drei Positionen abgestützt werden müssen, um eine stabile Lage zu erreichen. Aus diesem Grund muss bei weniger als drei Piezoelementen 6i bis 6iv noch jeweils ein oder zwei weitere Aufstandselemente vorgesehen sein. Diese führen allerdings zu Kraftnebenschlüssen, was die Messgenauigkeit der Messvorrichtung 2 verschlechtert. Insbesondere verringern diese anteilig den Kraftfluss über das vorhandene Piezoelement oder die vorhandenen Piezoelemente 6i bis 6iv. Darüber hinaus können die weiteren Abstützelemente zu Nichtlinearitäten führen.

In Bezug auf das vierte Ausführungsbeispiel der Messanordnung 1 kann auch vorgesehen sein, dass die Teilelemente 6i-1, 6ii-1, 6iii-1, 6iv-1, welche die Scherkraft messen, um 45° gedreht sind. Dies verringert zwar den Anteil an gemessener Kraftkomponente in tangentialer Richtung an die Drehrichtung des Rotors 4 Ft, ermöglicht aber ein zusätzliches Messen der Kraftkomponente $F_z$. Auch dies kann anhand eines Gleichungssystems erfolgen, welches in diesem Fall jedoch leicht abgewandelt ist:

$$\begin{pmatrix} Mz \\ Fx \\ Fy \\ Mx \\ My \\ Fz \end{pmatrix} = \begin{pmatrix} C1Si & \cdots & C1Niv \\ \vdots & \ddots & \vdots \\ C6Si & \cdots & C6Niv \end{pmatrix} \begin{pmatrix} Si \\ \vdots \\ Siv \\ Ni \\ \vdots \\ Niv \end{pmatrix}$$

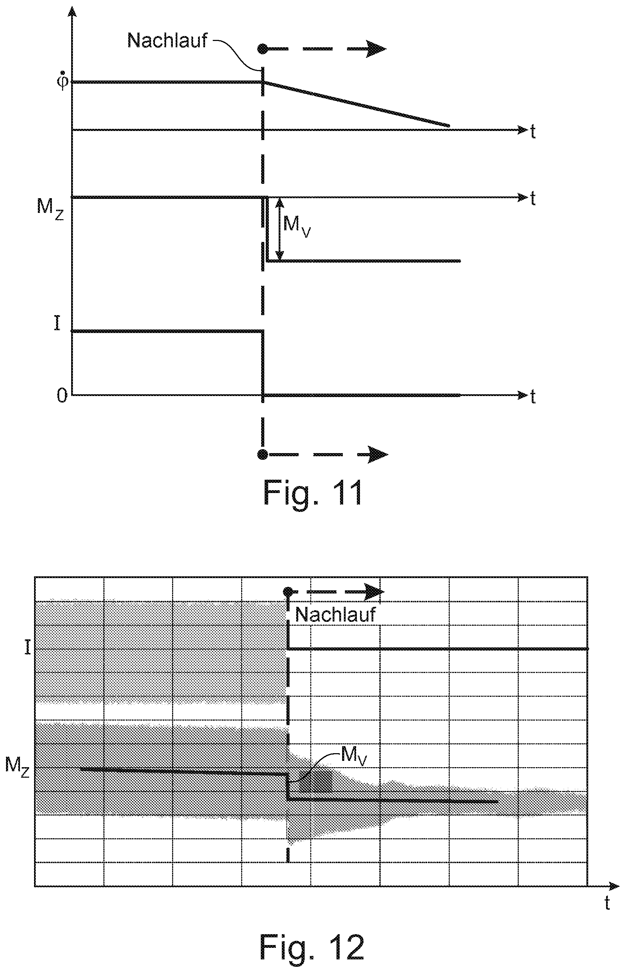

Anhand der **Figuren 11 bis 13** wird nachfolgend ein Ausführungsbeispiel eines Verfahrens zur Bestimmung eines Verlustmoments einer elektrischen Maschine 2 mit Rotor 4 beschrieben.

Bei diesem Verfahren können Messanordnungen zum Einsatz kommen, wie sie in Bezug auf die Figuren 1 bis 10 beschrieben wurden. Grundsätzlich ist es aber auch möglich, dass eine andere Messanordnung 1 und eine andere Messvorrichtung 3 zum Einsatz kommen, mit welchen das Verlustmoment ebenfalls mittels des Verfahrens 100 bestimmt werden kann. Insbesondere können Messvorrichtungen 3 zum Einsatz kommen, welche statt Piezoelementen andere Messelemente aufweisen. Darüber hinaus sind auch andere geometrische Anordnungen, sowohl in Bezug auf die Messvorrichtung 3 als auch in Bezug auf die Messanordnung 1 als Ganzes möglich.

Wie eingangs beschrieben, wird der Rotor 4 eines Elektromotors 2 durch die Wechselwirkung in einem Magnetfeld beschleunigt. Dabei wird das Antriebsmoment $M_a$ aufgebracht. Gleichzeitig wirken diesem Antriebsmoment $M_a$ Verlustmomente $M_v$ entgegen.

Wird der Rotor 4 beschleunigt, so wirkt der Beschleunigung ein Moment entgegen, welches durch das Massenträgheitsmoment J des Rotors 4 erzeugt wird. Hierbei gilt $M_z = J\ddot{\varphi}$ :

$$M_z = M_a - M_v = J\ddot{\varphi}$$

Entsprechend der Gleichung kann bei einem Beschleunigungsvorgang oder einem Bremsvorgang des Rotors 4 das Antriebsmoment $M_a$ nicht von dem Verlustmoment $M_v$ unterschieden werden.

Bei konstanter Winkelgeschwindigkeit ($\ddot{\varphi} = 0$) gilt entsprechend:

$$M_a - M_v = 0$$

Wird nun der Motor 2 im Leerlauf betrieben, so dass der Rotor 4 ausläuft, ein sogenannter "Coast-down"-Betrieb, so wird das Antriebsmoment $M_a = 0$. Entsprechend gilt dann für das gemessene axiale Drehmoment $M_z = - M_v$.

Der Leerlaufbetrieb kann dadurch erreicht werden, dass der Motor stromlos gestellt bzw. der Steuerstrom unterbrochen wird.

Entsprechend reagiert das axiale Drehmoment $M_z$ des Rotors 4 mit einer Sprungantwort, weil in dem Moment des Beginns des Leerlaufbetriebs nur noch das Verlustmoment $M_v$ anliegt. Diese Sprungantwort ist ebenfalls in dem Diagramm von Figur 11 dargestellt, des Weiteren auch der Verlauf des Steuerstroms I gegenüber der Zeit.

Die Sprungantwort des axialen Drehmoments $M_z$ kann als Reaktionsmoment an dem Motor 2 gemessen werden, insbesondere mittels einem der gezeigten Ausführungsbeispiele einer Messanordnung 1.

In dem Moment, in dem das Antriebsmoment $M_a$ Null wird, fängt die Drehgeschwindigkeit $\dot{\varphi}$ des Rotors 4 an, sich zu verringern, wie in dem Diagramm gemäß Figur 11 dargestellt.

Der Einsatz von Piezoelementen eignet sich besonders gut für diese Messung, da Piezoelemente besonders gut dynamische Kräfte messen können.

Figur 12 zeigt ein weiteres Diagramm, in welchem reale Messungen des Steuerstroms I und des axialen Drehmoments $M_z$ einer realen Messung an einer Messanordnung 1 gemäß dem ersten Ausführungsbeispiel dargestellt sind.

Das gemessene Bremsmoment $M_v$ ist 0,5 Nm. Der in dem Diagramm als Steuerstrom I dargestellte Bereich entspricht drei periodischen Phasenströmen von Amplituden mit zirka 40 A. Diese gehen zum Zeitpunkt des Coast-down auf 0. Das Signal des axialen Drehmoments $M_z$ ist mittels eines Tiefpasses bei zirka 500 Hz gefiltert. Die Sprungantwort des axialen Drehmoments $M_z$ ergibt sich aus den als Linien eingezeichneten linearen Fits des Drehmomentsignals $M_z$ vor und nach dem Coast-down. Ein Blockdiagramm des Ausführungsbeispiels Verfahrens 100 zum Bestimmen eines Verlustmoments einer elektrischen Maschine 2 mit rotierender Welle 4 ist in Figur 11 dargestellt.

Wie bereits im Vorhergehenden erläutert, ist der elektrische Motor 2 frei drehend auf der Messvorrichtung 1 aufgenommen und insbesondere ist mit dem frei drehenden Rotor 4 bzw. dessen Welle 9 keine Belastungsmaschine verbunden.

In einem ersten Arbeitsschritt 101 wird der Motor 2 mittels eines Steuerstroms I in der Weise betrieben, dass der Rotor 4 eine vordefinierte Drehzahl erreicht. Der Motor 2 wird hierbei eigenständig, d.h. durch das in dem Motor 2 erzeugte Beschleunigungsmoment $M_a$ auf die vordefinierte Drehzahl beschleunigt.

Als Steuerströme kommen vorzugsweise dreiphasige sinusförmige Ströme zum Einsatz, in Abhängigkeit der Art von Motor 2.

Nachdem die vordefinierte Drehzahl erreicht ist, wird der Motor 2 vorzugsweise mit konstanter Drehzahl weiter betrieben.

In einem zweiten Arbeitsschritt 102 wird der Motor 2 dann im Leerlauf betrieben. Vorzugsweise wird hierfür der Steuerstrom I abgeschaltet, insbesondere unterbrochen. Vorzugsweise kommt hierfür ein Schalter oder Relais zum Einsatz.

In einem dritten Arbeitsschritt 103 wird das Signal mittels eines Tiefpassfilters, welcher vorzugsweise eine Grenzfrequenz von 500 Hz aufweist, gefiltert. Hierdurch kann ein niederfrequentes Signal aus einem hochdynamischen Messsignal, wie es beispielsweise von Piezoelementen 6i bis 6iv erzeugt wird, erkannt werden.

In einem vierten Arbeitsschritt 104 wird ein Sprung in dem gefilterten Signal identifiziert.

In Abhängigkeit der Position des Sprungs wird das Signal in einem ersten Abschnitt vor dem identifizierten Sprung und in einem zweiten Abschnitt nach dem Sprung in einem fünften Arbeitsschritt 105 jeweils gefittet.

Auf der Grundlage der vor dem Sprung und nach dem Sprung gefitteten Signalabschnitte wird in einem sechsten Arbeitsschritt 106 der Betrag des Sprungs bestimmt. Dieser Betrag des Sprungs entspricht dem axialen Drehmoment $M_z$ des Rotors 4 zum Zeitpunkt des Coast-down, d.h. des Umschaltens des Motors 2 in den Leerlaufbetrieb, und mithin dem negativen Verlustmoment $M_V$ in diesem Moment. Vorzugsweise wird das Verlustmoment $M_V$ an eine Schnittstelle ausgegeben.

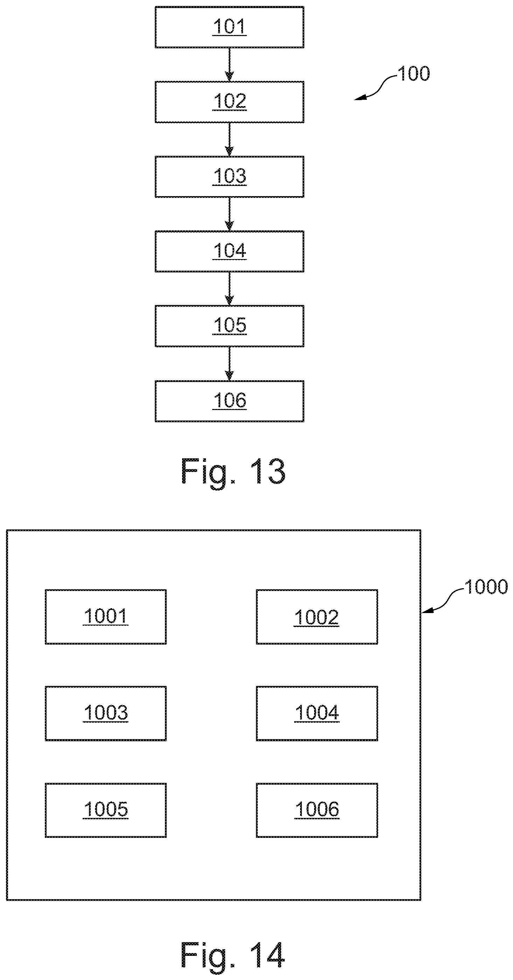

**Figur 14** zeigt ein System 1000 zum Bestimmen eines Verlustmoments einer elektrischen Maschine 2 mit Rotor, mittels einer der Ausführungsbeispiele der Messanordnungen. Das System 1000 weist Mittel 1001 zum Steuern eines Betriebs der Maschine 2 auf, eingerichtet, um die Maschine 2 zunächst in der Weise zu betreiben, dass der Rotor 4 eine vordefinierte Drehzahl erreicht, und um die Maschine danach im Leerlauf zu betreiben. Des Weiteren weist das System 1000 Mittel 1002 zum Überwachen eines Signals der Messvorrichtung 3, welches das axiale Moment an der Maschine 2 repräsentiert, auf. Des Weiteren weist das System 1000 Mittel 1004 zum Identifizieren eines Sprungs in dem Signal und Mittel 1006 zum Bestimmen des Betrags des Sprungs, wobei der Betrag das Verlustmoment der elektrischen Maschine 2 angibt. Weitere, optionale Mittel 1003 zum Filtern des Signals und Mittel 1005 zum Fitten des Signals können vorhanden sein.

Es wird darauf hingewiesen, dass es sich bei den Ausführungsbeispielen lediglich um Beispiele handelt, die den Schutzbereich, die Anwendungen und den Aufbau in keiner Weise einschränken. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

**Patentansprüche**

1. Verfahren (100) zum Bestimmen eines Verlustmoments einer elektrischen Maschine (2) mit einem Rotor (4), wobei die Maschine (2) in der Weise an einer Messvorrichtung (3) gelagert ist, dass ein axiales Drehmoment an der Maschine (1) messbar ist und wobei der Rotor (4) frei drehend ist, die folgenden Arbeitsschritte aufweisend:

   erstes Betreiben (101) der Maschine (2) in der Weise, dass der Rotor (4) eine vordefinierte Drehzahl erreicht;
   zweites Betreiben (102) der Maschine (2) im Leerlauf, wenn die vordefinierte Drehzahl erreicht ist, wobei ein Signal der Messvorrichtung (3), welches das axiale Moment an der Maschine (2) repräsentiert, überwacht wird;
   Identifizieren (104) eines Sprungs in dem Signal; und
   Bestimmen (106) des Betrags des Sprungs, wobei der Betrag das Verlustmoment der elektrischen Maschine (2) angibt.

2. Verfahren (100) nach Anspruch 1, des Weiteren den Arbeitsschritt aufweisend: Filtern (103) des Signals mittels eines Tiefpassfilters, welcher vorzugsweise eine Grenzfrequenz von etwa 500 Hz aufweist.

3. Verfahren (100) nach Anspruch 1 oder 2, des Weiteren den Arbeitsschritt aufweisend:
   erstes Fitten (105) wenigstens eines ersten Abschnitts des Signals vor dem identifizierten Sprung und zweites Fitten wenigstens eines zweiten Abschnitts des Signals nach dem identifizierten Sprung, wobei der Betrag des Sprungs auf der Grundlage des ersten Fittens und des zweiten Fittens bestimmt wird.

4. Verfahren (100) nach einem der Ansprüche 1 bis 3, wobei die Messvorrichtung (3) eine Fixierungseinrichtung (5) und wenigstens ein Piezoelement, bevorzugt drei, noch bevorzugter vier Piezoelemente (6i, 6ii, 6iii, 6iv) mit jeweils einer Vorzugsrichtung aufweist,
   wobei die Fixierungseinrichtung (5) das wenigstens eine Piezoelement (6i, 6ii, 6iii, 6iv) trägt und die elektrische Maschine (2) über das wenigstens eine Piezoelement (6i, 6ii, 6iii, 6iv) in der Weise lagert, dass mittels des wenigstens einen Piezoelements (6i, 6ii, 6iii, 6iv) Kräfte zwischen der elektrischen Maschine (2) und der Fixierungseinrichtung (5) messbar sind.

5. Verfahren (100) nach Anspruch 4, wobei die Vorzugsrichtung oder die Vorzugsrichtungen jeweils parallel zu oder in einer einzigen Ebene liegen, und wobei die Drehachse (7) des Rotors (4) die Ebene in einem Winkel zwischen 45° und 135°, bevorzugt zwischen 85° und 95°, am bevorzugtesten wenigstens im Wesentlichen senkrecht, schneidet.

6. Verfahren (100) nach Anspruch 5 mit wenigstens zwei Piezoelementen (6i, 6ii, 6iii, 6iv), wobei die Piezoelemente (6i, 6ii, 6iii, 6iv) jeweils an unterschiedlichen Positionen um eine Drehachse (7) des Rotors (4) der elektrischen Maschine (2) angeordnet sind.

7. Verfahren (100) nach einem der Ansprüche 4 bis 6, wobei das wenigstens eine Piezoelement (6i, 6ii, 6iii, 6iv) ein erstes Teilelement (6i-1, 6ii-1, 6iii-1, 6iv-1) und ein zweites Teilelement (6i-2, 6ii-2, 6iii-2, 6iv-2) aufweisen, mittels welchen jeweils Scherkräfte messbar sind, wobei eine Vorzugsrichtung des ersten Teilelements (6i-1, 6ii-1, 6iii-1, 6iv-1) wenigstens im Wesentlichen senkrecht zu einer Vorzugsrichtung des zweiten Teilelements ausgerichtet ist, wobei die beiden Teilelemente (6i-1, 6i-2; 6ii-1; 6ii-2; 6iii-1, 6iii-2; 6iv-1, 6iv-2) jeweils entlang ihrer Stirnseiten zueinander angeordnet sind, wobei eine Messung des ersten Teilelements (6i-1, 6ii-1, 6iii-1, 6iv-1) und eine Messung des zweiten Teilelements (6i-2, 6ii-2, 6iii-2, 6iv-2) in dem Signal der Messvorrichtung (2) berücksichtigt wird.

8. Verfahren (100) nach einem der Ansprüche 4 bis 7, wobei die Vorzugsrichtungen des wenigstens einen Piezoelements (6i, 6ii, 6iii, 6iv) jeweils wenigstens im Wesentlichen tangential zu einer Drehrichtung des Rotors (4) ausgerichtet sind.

9. Verfahren (100) nach einem der Ansprüche 5 bis 8, wobei ein jeweiliger Winkel zwischen den Vorzugsrichtungen des wenigstens einen Piezoelements (6i, 6ii, 6iii, 6iv) und Tangenten an die Drehrichtung des Rotors (4) an den Orten des wenigstens einen Piezoelements (6i, 6ii, 6iii, 6iv) in dem Signal des axialen Drehmoments berücksichtigt wird.

10. Verfahren (100) nach Anspruch 4, wobei die Vorzugsrichtung oder die Vorzugsrichtungen jeweils parallel zu oder in einer einzigen Ebene liegen oder wobei die Vorzugsrichtung oder die Vorzugsrichtungen jeweils senkrecht zu einer einzigen Ebene liegen, und
wobei eine Drehachse (7) des Rotors (4) wenigstens im Wesentlichen parallel zu der Ebene, insbesondere in waagrechter Richtung, ausgerichtet ist.

11. Verfahren (100) nach Anspruch 10 mit wenigstens zwei Piezoelementen (6i, 6ii, 6iii, 6iv), wobei die Piezoelemente (6i, 6ii, 6iii, 6iv) jeweils an unterschiedlichen Positionen und jeweils zwei Piezoelemente (6i, 6iv; 6ii, 6iii) auf einer der beiden Seiten der Fixierungseinrichtung in Bezug auf die Drehachse (7) angeordnet sind.

12. Verfahren nach Anspruch 10 oder 11, wobei das wenigstens eine Piezoelement (6i, 6ii, 6iii, 6iv) ein erstes Teilelement (6i-1, 6ii-1, 6iii-1, 6iv-1) und/oder zweites Teilelement (6i-2, 6ii-2, 6iii-2, 6iv-2), mittels welchem oder welchen eine Scherkraft messbar ist, und ein drittes Teilelement (6i-3, 6ii-3, 6iii-3, 6iv-3), mittels welchem eine Druckkraft messbar ist, aufweisen, wobei die Teilelemente (6i-1, 6i-2, 6i-3; 6ii-1; 6ii-2, 6ii-3; 6iii-1, 6iii-2, 6iii-3; 6iv-1, 6iv-2, 6iv-3) entlang ihrer Stirnseiten zueinander angeordnet sind, wobei eine Messung des ersten Teilelements (6i-1, 6ii-1, 6iii-1, 6iv-1) und/oder zweiten Teilelements (6i-2, 6ii-2, 6iii-2, 6iv-2) und eine Messung des dritten Teilelements (6i-3, 6ii-3, 6iii-3, 6iv-3) in dem Signal der Messvorrichtung berücksichtigt wird.

13. Verfahren (100) nach einem der Ansprüche 4 bis 12, wobei die Messvorrichtung (3) des Weiteren eine Vorspanneinrichtung (8) und erste Vorspannelemente aufweist, wobei das wenigstens eine Piezoelement (6i, 6ii, 6iii, 6iv) zwischen der Fixierungseinrichtung (5) und der Vorspanneinrichtung (8) mittels der ersten Vorspannelemente in der Weise vorspannbar oder vorgespannt sind, dass das wenigstens eine Piezoelement (6i, 6ii, 6iii, 6iv) kraftschlüssig fixiert ist, und wobei die elektrische Maschine (2) an der Vorspanneinrichtung (8) drehfest befestigt ist.

14. Verfahren (100) nach einem der Ansprüche 4 bis 13, wobei die elektrische Maschine (2) an der Fixierungseinrichtung (5) befestigt ist und von dem wenigstens einen Piezoelement (6i, 6ii, 6iii, 6iv) in der Weise abgestützt wird, dass das wenigstens eine Piezoelement (6i, 6ii, 6iii, 6iv) kraftschlüssig fixiert ist.

15. Verfahren (100) nach einem der Ansprüche 4 bis 14, wobei die Fixierungseinrichtung (5) oder die elektrische Maschine (2) ausschließlich durch das wenigstens eine Piezoelement (6i, 6ii, 6iii, 6iv) abgestützt wird.

16. System (1000) zum Bestimmen eines Verlustmoments einer elektrischen Maschine (2) mit Rotor (4),
wobei die Maschine (2) in der Weise an einer Messvorrichtung (3) gelagert ist, dass ein axiales Drehmoment an der Maschine (1) messbar ist und wobei der Rotor (4) frei drehend ist, aufweisend:

Mittel (1001) zum Steuern eines Betriebs der Maschine (2), eingerichtet, um die Maschine (2) zunächst in der Weise zu betreiben, dass der Rotor (4) eine vordefinierte Drehzahl erreicht, und um die Maschine danach im Leerlauf zu betreiben;

Mittel (1002) zum Überwachen eines Signals der Messvorrichtung (3), welches das axiale Moment an der Maschine (2) repräsentiert;
Mittel (1004) zum Identifizieren eines Sprungs in dem Signal; und
Mittel (1006) zum Bestimmen des Betrags des Sprungs, wobei der Betrag das Verlustmoment der elektrischen Maschine (2) angibt.

**Claims**

1. Method (100) for determining a loss torque of an electric machine (2) with a rotor (4),
   wherein the machine (2) is mounted on a measuring device (3) in such a way that an axial torque can be measured on the machine (1) and wherein the rotor (4) is freely rotating, comprising the following steps:

   first operating (101) of the machine (2) in such a way that the rotor (4) reaches a predefined rotational speed;
   second operating (102) of the machine (2) at idle speed when the predefined rotational speed is reached, whereas a signal from the measuring device (3), which represents the axial torque on the machine (2), is monitored;
   identifying (104) a jump in the signal; and
   determining (106) the magnitude of the jump, wherein the magnitude indicates the loss torque of the electric machine (2).

2. Method (100) according to claim 1, further comprising the step of: filtering (103) the signal by means of a low-pass filter, which preferably has a cut-off frequency of approximately 500 Hz.

3. Method (100) according to claim 1 or 2, further comprising the step of: first fitting (105) of at least a first portion of the signal before the identified jump and second fitting of at least a second portion of the signal after the identified jump, wherein the magnitude of the jump is determined based on the first fitting and the second fitting.

4. Method (100) according to one of claims 1 to 3, wherein the measuring device (3) has a fixing device (5) and at least one piezo element, preferably three, even more preferably four piezo elements (6i, 6ii, 6iii, 6iv), each with a preferred direction,
   wherein the fixing device (5) carries the at least one piezo element (6i, 6ii, 6iii, 6iv) and supports the electric machine (2) via the at least one piezo element (6i, 6ii, 6iii, 6iv) in such a way that forces between the electric machine (2) and the fixing device (5) can be measured by means of the at least one piezo element (6i, 6ii, 6iii, 6iv).

5. Method (100) according to claim 4, wherein the preferred direction or directions are each parallel to or lie in a single plane, and wherein the axis of rotation (7) of the rotor (4) intersects the plane at an angle between 45° and 135°, preferably between 85° and 95°, most preferably at least substantially perpendicular.

6. Method (100) according to claim 5, with at least two piezo elements (6i, 6ii, 6iii, 6iv), wherein the piezo elements (6i, 6ii, 6iii, 6iv) are each arranged at different positions around a rotational axis (7) of the rotor (4) of the electric machine (2).

7. Method (100) according to one of claims 4 to 6, wherein the at least one piezoelectric element (6i, 6ii, 6iii, 6iv) comprises a first sub-element (6i-1, 6ii-1, 6iii-1, 6iv-1) and a second sub-element (6i-2, 6ii-2, 6iii-2, 6iv-2) by means of which shear forces can be measured, wherein a preferred direction of the first sub-element (6i-1, 6ii-1, 6iii-1, 6iv-1) is aligned at least substantially perpendicular to a preferred direction of the second sub-element, wherein both sub-elements (6i-1, 6i-2; 6ii-1; 6ii-2; 6iii-1, 6iii-2; 6iv-1, 6iv-2) are arranged along their end faces relative to each other, wherein a measurement of the first component (6i-1, 6ii-1, 6iii-1, 6iv-1) and a measurement of the second sub-element (6i-2, 6ii-2, 6iii-2, 6iv-2) are taken into account in the signal of the measuring device (2).

8. Method (100) according to one of claims 4 to 7, wherein the preferred directions of the at least one piezo element (6i, 6ii, 6iii, 6iv) are each aligned at least substantially tangentially to a direction of rotation of the rotor (4).

9. Method (100) according to one of claims 5 to 8, wherein a respective angle between the preferred directions of the at least one piezo element (6i, 6ii, 6iii, 6iv) and the tangents to the direction of rotation of the rotor (4) at the locations of the at least one piezo element (6i, 6ii, 6iii, 6iv) is taken into account in the axial torque signal.

10. Method (100) according to claim 4, wherein the preferred direction or directions are each parallel to or lie in a single plane, or wherein the preferred direction or directions are each perpendicular to a single plane, and wherein an axis of rotation (7) of the rotor (4) is aligned at least substantially parallel to the plane, in particular in a horizontal direction.

11. Method (100) according to claim 10 with at least two piezo elements (6i, 6ii, 6iii, 6iv), wherein the piezo elements (6i, 6ii, 6iii, 6iv) are each arranged at different positions and two piezo elements (6i, 6iv; 6ii, 6iii) are arranged on one of the two sides of the fixing device with respect to the axis of rotation (7).

12. Method according to claim 10 or 11, wherein the at least one piezo element (6i, 6ii, 6iii, 6iv) comprises a first sub-element (6i-1, 6ii-1, 6iii-1, 6iv-1) and/or a second sub-element (6i-2, 6ii-2, 6iii-2, 6iv-2), by means of which a shear force can be measured, and a third sub-element (6i-3, 6ii-3, 6iii-3, 6iv-3) by means of which a compressive force can be measured, wherein the sub-elements (6i-1, 6i-2, 6i-3; 6ii-1; 6ii-2; 6ii-3; 6iii-1, 6iii-2, 6iii-3; 6iv-1, 6iv-2, 6iv-3) are arranged along their front sides relative to each other, wherein a measurement of the first sub-element (6i-1, 6ii-1, 6iii-1, 6iv-1) and/or the second sub-element (6i-2, 6ii-2, 6iii-2, 6iv-2) and a measurement of the third sub-element (6i-3, 6ii-3, 6iii-3, 6iv-3) are taken into account in the signal of the measuring device.

13. Method (100) according to one of claims 4 to 12, wherein the measuring device (3) further comprises a preloading device (8) and first preloading elements, wherein the at least one piezo element (6i, 6ii, 6iii, 6iv) can be preloaded or are preloaded between the fixing device (5) and the preloading device (8) by means of the first preloading elements in such a way that the at least one piezo element (6i, 6ii, 6iii, 6iv) is fixed by force, and wherein the electric machine (2) is fixed to the preloading device (8) in such a way that it cannot rotate.

14. Method (100) according to one of claims 4 to 13, wherein the electric machine (2) is attached to the fixing device (5) and is supported by the at least one piezo element (6i, 6ii, 6iii, 6iv) in such a way that the at least one piezo element (6i, 6ii, 6iii, 6iv) is fixed by force.

15. Method (100) according to one of claims 4 to 14, wherein the fixing device (5) or the electric machine (2) is supported exclusively by the at least one piezo element (6i, 6ii, 6iii, 6iv).

16. System (1000) for determining a loss torque of an electric machine (2) with a rotor (4), wherein the machine (2) is mounted on a measuring device (3) in such a way that an axial torque can be measured on the machine (1) and wherein the rotor (4) is freely rotating, comprising: means (1001) for controlling operation of the machine (2), set up to initially operate the machine (2) in such a way that the rotor (4) reaches a predefined rotational speed, and thereafter to operate the machine at idle speed; means (1002) for monitoring a signal of the measuring device (3) representing the axial torque on the machine (2); means (1004) for identifying a jump in the signal; and means (1006) for determining the magnitude of the jump, the magnitude indicating the loss torque of the electric machine (2).

## Revendications

1. Procédé (100) pour déterminer un couple de perte d'une machine électrique (2) avec un rotor (4),
   dans lequel la machine (2) est montée sur un dispositif de mesure (3) de telle manière qu'un couple axial puisse être mesuré sur la machine (1) et dans lequel le rotor (4) libre en rotation, comprenant les étapes suivantes :

   un premier fonctionnement (101) de la machine (2) de manière à ce que le rotor (4) atteigne une vitesse de rotation prédéfinie ;
   un second fonctionnement (102) de la machine (2) en régime de ralenti lorsque la vitesse de rotation prédéfinie est atteinte, le signal du dispositif de mesure (3) représentant le moment axial de la machine (2) étant surveillé ;
   identifier (104) d'un saut dans le signal ; et
   déterminer (106) de l'amplitude du saut, l'amplitude indiquant le moment de perte de la machine électrique (2).

2. Procédé (100) selon la revendication 1, comprenant en outre l'étape consistant à : filtrer (103) le signal au moyen d'un filtre passe-bas, qui a de préférence une fréquence de coupure d'environ 500 Hz.

3. Procédé (100) selon la revendication 1 ou 2, comprenant en outre l'étape consistant à : ajuster d'abord (105) au moins une première partie du signal avant le saut identifié et ajuster ensuite au moins une deuxième partie du signal après le saut identifié, dans lequel l'amplitude du saut est déterminée sur la base du premier ajustement et du deuxième ajustement.

**4.** Procédé (100) selon l'une des revendications 1 à 3, dans lequel le dispositif de mesure (3) comporte un dispositif de fixation (5) et au moins un élément piézoélectrique, de préférence trois, ou encore mieux quatre éléments piézoélectriques (6i, 6ii, 6iii, 6iv), chacun avec une direction préférée, dans lequel le dispositif de fixation (5) porte le au moins un élément piézoélectrique (6i, 6ii, 6iii, 6iv) et supporte la machine électrique (2) via le au moins un élément piézoélectrique (6i, 6ii, 6iii, 6iv) de telle sorte que les forces entre la machine électrique (2) et le dispositif de fixation (5) puissent être mesurées.

**5.** Procédé (100) selon la revendication 4, dans lequel la ou les directions préférées sont chacune parallèles à un seul plan ou situées dans celui-ci, et dans lequel l'axe de rotation (7) du rotor (4) coupe le plan selon un angle compris entre 45° et 135°, de préférence entre 85° et 95°, et de manière particulièrement préférée, au moins sensiblement perpendiculairement.

**6.** Procédé (100) selon la revendication 5, avec au moins deux éléments piézoélectriques (6i, 6ii, 6iii, 6iv), dans lequel les éléments piézoélectriques (6i, 6ii, 6iii, 6iv) sont chacun disposés à des positions différentes autour d'un axe de rotation (7) du rotor (4) de la machine électrique (2).

**7.** Procédé (100) selon l'une des revendications 4 à 6, dans lequel le au moins un élément piézoélectrique (6i, 6ii, 6iii, 6iv) comporte un premier sous-élément (6i-1, 6ii-1, 6iii-1, 6iv-1) et un deuxième sous-élément (6i-2, 6ii-2, 6iii-2, 6iv-2) au moyen desquels des forces de cisaillement peuvent être mesurées, dans lequel une direction préférée du premier sous-élément (6i-1, 6ii-1, 6iii-1, 6iv-1) est alignée au moins sensiblement perpendiculairement à une direction préférée du deuxième sous-élément, dans lequel les deux sous-éléments (6i-1, 6i-2 ; 6ii-1 ; 6ii-2 ; 6iii-1, 6iii-2 ; 6iv-1, 6iv-2) sont disposés le long de leurs faces d'extrémité l'un par rapport à l'autre, dans lequel une mesure du premier composant (6i-1, 6ii-1, 6iii-1, 6iv-1) et une mesure du deuxième sous-élément (6i-2, 6ii-2, 6iii-2, 6iv-2) est prise en compte dans le signal du dispositif de mesure (2).

**8.** Procédé (100) selon l'une des revendications 4 à 7, dans lequel les directions préférées d'au moins un élément piézoélectrique (6i, 6ii, 6iii, 6iv) sont chacune alignées au moins sensiblement tangentiellement à une direction de rotation du rotor (4).

**9.** Procédé (100) selon l'une des revendications 5 à 8, dans lequel un angle respectif entre les directions préférées d'au moins un élément piézoélectrique (6i, 6ii, 6iii, 6iv) et les tangentes à la direction de rotation du rotor (4) aux emplacements dudit au moins un élément piézoélectrique (6i, 6ii, 6iii, 6iv) est pris en compte dans le signal de couple axial.

**10.** Procédé (100) selon la revendication 4, dans lequel la ou les directions préférées sont chacune parallèles à un seul plan ou se trouvent dans celui-ci, ou dans lequel la ou les directions préférées sont chacune perpendiculaires à un seul plan, et dans lequel un axe de rotation (7) du rotor (4) est aligné au moins sensiblement parallèlement au plan, en particulier dans une direction horizontale.

**11.** Procédé (100) selon la revendication 10 avec au moins deux éléments piézoélectriques (6i, 6ii, 6iii, 6iv), dans lequel les éléments piézoélectriques (6i, 6ii, 6iii, 6iv) sont chacun disposés à des positions différentes et deux éléments piézoélectriques (6i, 6iv ; 6ii, 6iii) sont disposés sur l'un des deux côtés du dispositif de fixation par rapport à l'axe de rotation (7).

**12.** Procédé selon la revendication 10 ou 11, dans lequel le au moins un élément piézoélectrique (6i, 6ii, 6iii, 6iv) comporte un premier sous-élément (6i-1, 6ii-1, 6iii-1, 6iv-1) et/ou un deuxième sous-élément (6i-2, 6ii-2, 6iii-2, 6iv-2), au moyen desquels une force de cisaillement peut être mesurée, et un troisième sous-élément (6i-3, 6ii-3, 6iii-3, 6iv-3) au moyen duquel une force de compression peut être mesurée, dans lequel les sous-éléments (6i-1, 6i-2, 6i-3 ; 6ii-1 ; 6ii-2, 6ii-3 ; 6iii-1, 6iii-2, 6iii-3 ; 6iv-1, 6iv-2, 6iv-3) sont disposés le long de leurs côtés avant les uns par rapport aux autres, une mesure du premier sous-élément (6i-1, 6ii-1, 6iii-1, 6iv-1) et/ou du deuxième sous-élément (6i-2, 6ii-2, 6iii-2, 6iv-2) et une mesure du troisième sous-élément (6i-3, 6ii-3, 6iii-3, 6iv-3) sont prises en compte dans le signal du dispositif de mesure.

**13.** Procédé (100) selon l'une des revendications 4 à 12, dans lequel le dispositif de mesure (3) comprend en outre un dispositif de précharge (8) et des premiers éléments de précharge, dans lequel le au moins un élément piézoélectrique (6i, 6ii, 6iii, 6iv) peut être préchargé ou est préchargé entre le dispositif de fixation (5) et le dispositif de précharge (8) au moyen des premiers éléments de précharge de telle sorte que le au moins un élément piézoélectrique (6i, 6ii, 6iii, 6iv) est fixé par la force, et dans lequel la machine électrique (2) est fixée au dispositif de précharge (8) de telle sorte qu'elle ne peut pas tourner.

14. Procédé (100) selon l'une des revendications 4 à 13, dans lequel la machine électrique (2) est fixée au dispositif de fixation (5) et est supportée par au moins un élément piézoélectrique (6i, 6ii, 6iii, 6iv) de telle sorte que le au moins un élément piézoélectrique (6i, 6ii, 6iii, 6iv) soit fixé par ajustement serré.

15. Procédé (100) selon l'une des revendications 4 à 14, dans lequel le dispositif de fixation (5) ou la machine électrique (2) est supporté exclusivement par au moins un élément piézoélectrique (6i, 6ii, 6iii, 6iv).

16. Système (1000) pour déterminer un couple de perte d'une machine électrique (2) avec un rotor (4), dans lequel la machine (2) est montée sur un dispositif de mesure (3) de telle manière qu'un couple axial peut être mesuré sur la machine (1) et dans lequel le rotor (4) tourne librement, comprenant : des moyens (1001) pour commander le fonctionnement de la machine (2), agencés pour faire fonctionner initialement la machine (2) de telle sorte que le rotor (4) atteigne une vitesse de rotation prédéfinie, puis pour faire fonctionner la machine à vide ; des moyens (1002) pour surveiller un signal provenant du dispositif de mesure (3) représentant le couple axial sur la machine (2) ; des moyens (1004) pour identifier un saut dans le signal ; et des moyens (1006) pour déterminer l'amplitude du saut, l'amplitude indiquant le couple de perte de la machine électrique (2).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

EP 4 609 158 B1

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013109415 A1
- WO 2018046296 A1
- WO 2019144171 A1
- WO 2019144172 A1